# EUROPÄISCHE PATENTSCHRIFT

(11) **EP 2 202 051 B1**
(45) Veröffentlichungstag und Bekanntmachung des Hinweises auf die Patenterteilung: **14.03.2012**
(21) Anmeldenummer: 09180109.2
(22) Anmeldetag: 21.12.2009
(51) Int. Cl.: B29C 65/14, B29C 65/78

(54) **Infrarotschweißvorrichtung mit austauschbarem Schweissmodul**
Infrared welding device with interchangeable welding module
Dispositif de soudure par infrarouge avec module de soudage interchangeables

(30) Priorität: 29.12.2008 DE 102008063177
(43) Veröffentlichungstag der Anmeldung: 30.06.2010
(73) Patentinhaber: FRIMO Group GmbH, 49504 Lotte (DE)
(72) Erfinder: Böl, Detlev, 24568 Kaltenkirchen (DE)
(74) Vertreter: HOFFMANN EITLE

(56) Entgegenhaltungen:
- EP-A2- 0 327 265
- DE-U1-202006 003 323
- GB-A- 2 345 459
- US-A- 4 960 478
- US-A1- 2003 221 783
- "Infrared Welder" INTERNET CITATION 1. Januar 2006 (2006-01-01), XP007912945 Gefunden im Internet: URL:http://web.archive.org/web/20060212080 910/http://forwardtech.com/Plas ticAssembly/Infrared/> [gefunden am 2010-05-05]
- "HOT PLATE WELDERS" INTERNET CITATION 8. März 2006 (2006-03-08), XP000962871 Gefunden im Internet: URL:http://www.forwardtech.com/PlasticAsse mbly/HotPlate/> [gefunden am 2006-03-08]

## Beschreibung

Die Erfindung betrifft eine Infrarotschweißvorrichtung, umfassend ein Maschinengestell mit zumindest zwei Werkstückträgern für zwei Werkstücke, deren Abstand veränderlich ist, sowie zumindest einem Infrarotstrahler, der an einem beweglichen Werkzeughalter des Maschinengestells festgelegt und in den durch den Abstand der Werkstückträger gebildeten Zwischenraum der Werkstücke einbringbar und daraus entfernbar ist. Die InFrarotschweißvorrichtung gelangt bei der gegenseitigen Verschweißung von großformatigen, thermoplastischen Kunststoffteilen zur Anwendung, die beispielsweise bei der Herstellung von Innraumverkleidungsteilen von Kraftfahrzeugen zur Anwendung gelangen.

### Stand der Technik

Eine Infrarotschweißvorrichtung der eingangs genannten Art ist aus der DE 20 2006 003 323 U1 bekannt. Dabei werden die in einem gesonderten Arbeitsschritt durch Spritzgießen, Blasformen, Stanzen, Warmformen oder ähnlich hergestellten Kunststoffteile in die Werkstückaufnahmen eingelegt und in Bezug auf den oder die Infrarotstrahler so positioniert, dass die zu verschweißenden Teilflächen bis zum Erreichen eines schmelzflüssigen Zustandes erweichen. Im Anschluss daran wird der mindestens eine Infrarotstrahler aus dem Zwischenraum zwischen den Teilflächen entfernt und die Teilflächen werden durch gegenseitige Annäherung und nachfolgende Verpressung ineinanderübergehend verschmolzen und verbunden. Die Verbindung ist nach der sich anschließenden Abkühlung beständig, so dass die fertig verbundenen Kunststoffteile entnommen und Ihrer Verwendung zugeführt werden können.

Die Erzielung eines guten Arbeitsergebnisses setzt eine exakte Betätigung des Infrarotstrahlers voraus, was mit einem erheblichen Zeitaufwand bezüglich der Ansteuerung verbunden ist. Auch sind die Umrüstarbeiten in Bezug auf eine Verschweißung abweichend gestalteter Werkstücke sehr aufwendig, weil die Werkstückhalter und der Werkzeugzeughatter mit dem Maschinengestell verschraubt und speziell angepasst sind. Es ist daher erforderlich, in eine Umrüstung auf ein anders Werkstück jeweils einen erheblichen Zeitaufwand zu investieren.

Die US 2003/0221783 A1 offenbart eine Infrarotschweißvorrichtung gemäß dem Oberbegriff des Anspruchs 1.

Die Internetseite http://www.forwardtech.com/plastic-assembly/infrared-welders/aboutinfrared-welding offenbart eine Infrarotschweißvorrichtung umfassend zwei Werkstückträger und ein Werkzeughalter, die zusammen transportabel sind. Das Werkzeug dieser Infrarotschweißvorrichtung ist mittels eines Schnellwechsel-Mechanismus austauschbar.

Die GB 2 345 459 A offenbart eine Schweißvorrichtung mit einer oberen und einer unteren Spannvorrichtung und einer in Bereitschaft stehenden Heizplatte, die zwischen die Spannvorrichtungen geschoben werden kann.

Der Erfindung liegt die Aufgabe zu Grunde, eine solche Infrarotschweißvorrichtung derart weiter zu entwickeln, dass sie der Zeitaufwand bei einem eventuellen Werkstückwechsel sowohl hinsichtlich der Umrüstung aus auch hinsichtlich der Ansteuerung der Bewegungen und der Betätigung des Infrarotstrahlers erheblich reduziert.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Die erfindungsgemäße Infrarotschweißvorrichtung umfasst zur Lösung dieser Aufgabe ein Maschinengestell mit zumindest zwei Werkstückträgern für zwei Werkstücke, deren Abstand veränderlich ist, sowie zumindest einem Infrarotstrahler, der an einem beweglichen Werkzeughalter des Maschinengestells festgelegt und in den durch den Abstand der Werkstückträger gebildeten Zwischenraum der Werkstücke einbringbar ist. Der Abstand der Werkstückträger und damit der Werkstücke von einander und die relative Zuordnung des Werkzeughalters sind durch eine Programmsteuerung veränderbar und die Werkstückträger und der Werkzeughalter sind zu einem als geschlosssene Baueinheit transportablen Schweißmodul zusammenfahrbar und durch Schnellkupplungen mit dem Maschinengestell verbindbar. Ein eventueller Werkzeugwechsel lässt sich dadurch in wenigen Minuten bewirken.

Die Werkstückträger und/oder der Werkzeughalter können mit Abstandhaltern versehen und innerhalb des Schweißmoduls 7 durch die Abstandhalter 5 unverrückbar aufeinander abgestützt sein. Der in sich geschlossene Schweißmodul kann daher als in sich geschlossene und eigenstabile Baueinheit verlagert werden, ohne dass die Gefahr einer unbeabsichtigten Beschädigung des oder der Infrarotstrahler besteht. Die Infrarotstrahler werden während der Lagerung und des Transports vielmehr durch die Werkstückträger besonders geschützt, ohne dass es hierfür eines zusätzlichen Aufwands bedarf. Es können daher beliebige und auch mechanisch besonders empfindliche Infrarotstrahler verwendet werden, beispielsweise Quarzstrahler und / oder Wärmefolien.

Innerhalb des zusammengefahrenen, transportfähigen Schweißmoduls sind die einzelnen Teile so positioniert, dass sie ohne aufwendige Manipulationen mit den jeweiligen Schnellkupplungen des Maschinengestells in direkten Eingriff gebracht werden können. Dies beschleunigt einen Werkzeugwechsel.

Während der normalen Verwendung befinden sich zwischen den Werkstückträgern und dem Werkzeughalter bzw. dem daran festgelegten Infrarotstrahler zusätzlich die zu verschweißenden Werkstücke, was es ausschließt, dass die Abstandhalter während der normalen Verwendung des Schweißmoduls in eine Anlageberührung gelangen und die Erzielung eines korrekten Schweißprozesses behindern können. Die zur Erzielung einer guten Verschweißung der zu verbindenden Teile notwendige Verpressung kann daher bewirkt werden, ohne dass die Abstandhalter in eine gegenseitige Anlageberührung gelangen.

Die Programmsteuerung kann im einfachsten Fall durch eine Folgeschrittsteuerung erfolgen, die auch als pneumatische Steuerung ausgelegt sein kann. Sie kann einen zusätzlichen Modul zur Ein- und Ausschaltung des mindestens einen Infrarotstrahlers umfassen. Wenn mehrere Infrarotstrahler zur Erzeugung von unterschiedlichen Schweißzonen vorgesehen sind, kann es sachdienlich sein, Infrarotstrahler mit unterschiedlicher Leistung zu verwenden. Um dennoch beim gleichzeitigen Zusammenfügen der Werkstücke in allen Schweißzonen ein gutes Schweißergebnis zu erhalten, ist es dabei notwendig, die idealen Schweißtemperaturen in allen Schweißzonen gleichzeitig zu erzielen. Die Infrarotstrahler werden demgemäss aktiviert. Sie können in nicht zu erwärmenden Bereichen durch Blenden abgedeckt sein, um von einander getrennte Schweißzonen mit nur einem Infrarotstrahler zu erzeugen.

Die Infrarotstrahler können ferner in Verbindung mit Spiegeln auch auf schwierig zu erreichende Stellen der Werkstücke gerichtet sein. Ferner können Infrarotstrahler verwendet werden, die die einander gegenüberliegenden Schweißzonen mit nur einer Wärmquelle erwärmen.

Je nach Art des Infrarotstrahlers kann es wichtig sein, ihn während seiner Aktivierung in einen bestimmten Abstand von der zu erwärmenden Zone anzuordnen. Die Abstände der Werkstückhalter werden demgemäss mit Hilfe der Steuerung justiert.

Der Werkzeugwechsel lässt sich weiter beschleunigen, wenn die Programmsteuerung einen zusätzlichen Verriegelungsmodul für die Schnellkupplungen umfasst. Dabei ergibt sich der zusätzliche Vorteil, dass eine Inbetriebnahme besonders einfach blockierbar ist, wenn nicht alle Schnellkupplungen ordnungsgemäß betätigt sind. Einer unbeabsichtigten Beschädigung der Infrarotschweißvorrichtung wird dadurch vorgebeugt.

Als besonders vorteilhaft hat es sich erwiesen, wenn der Schweißmodul von hinten in das Maschinengestell einführbar und nur durch seitlich angebrachte Schnellkupplungen mit dem Maschinengestell 1 verbindbar ist. Die zur Beschickung der Infrarotschweißvorrichtung von vorn mit Werkstücken wird dadurch für einen Werkzeugwechsel nicht benötigt, was es ermöglicht, an der Vorderseite der Infrarotschweißvorrichtung Rollenbahnen o.ä. vorzusehen, um die Zu- und Abführung der Werkstücke zu erleichtern. Der Schweißmodul ist demgemäss zweckmäßig nur aus der Richtung der Vorderseite des Maschinengestells mit den zu verschweißenden Werkstücken beschickbar, wobei die verschweißten Werkstücke nur in Richtung der Vorderseite entnehmbar sind.

Aus ergonomischen Gründen hat es sich als zweckmäßig erwiesen, wenn zumindest ein Werkstückträger schwenkbar mit dem Maschinengestell verbindbar ist. Die gegenseitige, temporäre Verbindung der Werkstücke mit den Werkstückhaftern kann durch Saugnäpfe erfolgen und die Positionierung der Werkstücke lässt sich wesentlich erleichtern, wenn eine Zuführung über Kopf vermieden wird. Zumindest der obere Werkstückhalter sollte daher zumindest in eine senkrechte Lage, noch besser in eine zumindest angenähert tischartige Lage umschwenkbar sein.

Um das Einlegen und Entnehmen der Werkstücke nicht zu behindern, kann es ferner zweckmäßig sein, wenn der Werkzeughalter in dem Maschinengestell relativ zu den Werkstückträgern verschiebbar oder schwenkbar ist.

Um den Werkzeugwechsel weiter zu beschleunigen kann dem Maschinengestell rückseitig ein Speicher für zumindest zwei Schweißmodule zugeordnet sein, wobei Mittel vorgesehen sind, die es ermöglichen, die in dem Speicher aufgenommenen Schweißmodule alternativ in das Maschinengestell einzuführen und mit den Schnellkupplungen in Eingriff zu bringen. Der Speicher kann durch einen Ringspeicher oder ein Hochregallager gebildet sein. Ein Werkzeugwechsel kann dabei auch vollautomatisch erfolgen. Zumindest in dem Maschinengestell können dazu Gleitkufen und / oder Rollenbahnen zur erleichterten Einführung und Entnahme des Schweißmoduls vorgesehen sein.

Wenn zumindest zwei Schweißmodule vorgesehen sind, die übereinstimmend angebrachte Identifizierungskennzeichen tragen, besteht ferner die Möglichkeit, die Identifzierungskennzeichen in die Programmsteuerung eingebbar zu gestalten, wobei die Werkstückträger, der Werkzeughalter und der mindestens eine Infrarotstrahler in Abhängigkeit von dem jeweiligen ldentifizierungskennzeichen durch die Programmsteuerung betätigbar sind. Im Anschluss an einen Werkzeugwechsel ist dadurch eine erneute Justierung der Werkzeugbewegungen und der Einschaltzeiten und -zeitpunkte des mindestens einen Infrarotstrahlers entbehrlich und es kann unter Verwendung der bereits vorab hierzu gespeicherten Daten sofort wieder mit dem echten Produktionsbetrieb begonnen werden.

Zu solchen Zwecken hat es sich als zweckmäßig erwiesen, wenn die Programmsteuerung in einem Computer enthalten ist, wenn die Identifizierungskennzeichen durch Sensoren des Maschinengestells, der Werkstückträger und / oder des Werkzeughalters identifizierbar sind, wenn die Sensoren signalleitend mit dem Computer verbunden sind und wenn die Werkstückträger, der Werkzeughalter und der mindestens eine Infrarotstrahler 3 in Abhängigkeit von dem jeweiligen Identifizierungskennzeichen durch den Computer bewegt und /oder betätigbar sind.

### Zeichnung

Die Erfindung wird nachfolgend an Hand der Zeichnung weiter verdeutlicht. Es zeigen:
Fig. 1 eine beispielhafte Ausführung der Infrarotschweißvorrichtung in einer Ansicht von vorn.
Fig. 2 einen zu einer Transporteinheit zusammengefahrenen Infrarotschweißmodul in einer Ansicht von vorn
Fig. 3 Eine Infrarotschweißvorrichtung von der Seite mit einem an der Rückseite angeordneten Speicher für mehrere Infrarotschweißmodule
Fig. 4 zwei zu verschweißende, beispielhafte Werkstücke in quergeschnittener Darstellung
Fig. 5 die Werkstücke gemäß Fig. 4 in Anschluss an die gegenseitige Verschweißung

### Beschreibung der Ausführungsbeispiele

Übereinstimmende Bezugszeichen bezeichnen in den verschiedenen Zeichnungen identische Teile.

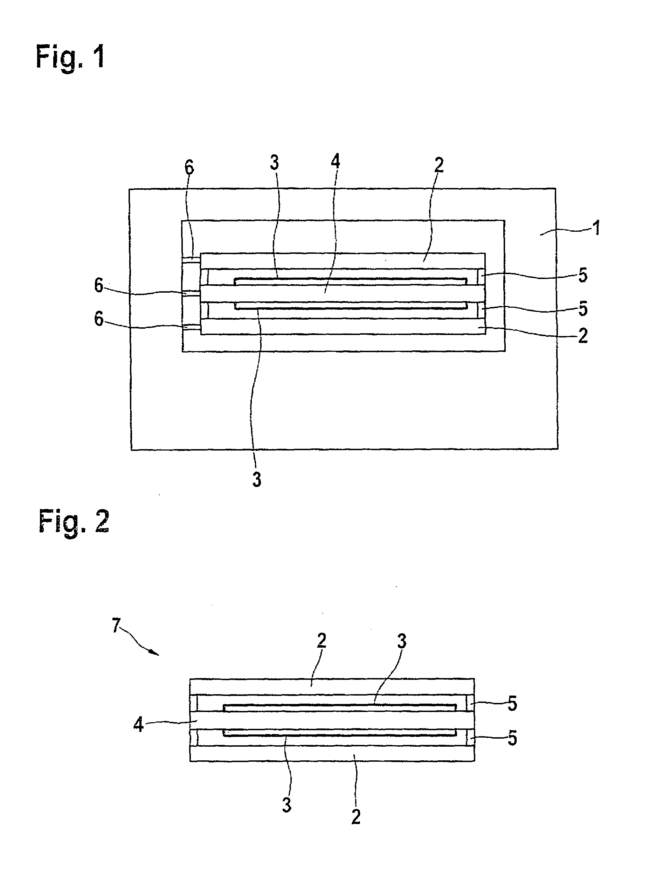

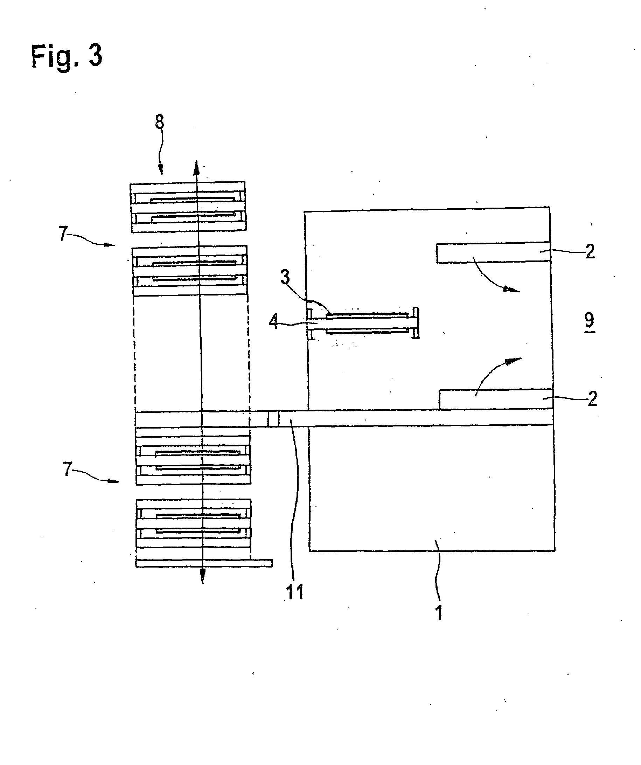

Fig. 1 zeigt eine beispielhafte Ausführung der Infrarotschweißvorrichtung in einer Ansicht von vorn. Sie umfasst ein Maschinengestell 1 mit einem darin eingefahrenen Schweißmodul 7 aus zwei Werkstückträgern 2 für zwei Werkstücke 10.1, 10.2, deren Abstand veränderlich ist, sowie zwei Infrarotstrahlern 3, die an einem beweglichen Werkzeughalter 4 des Maschinengestells 1 festgelegt und in den durch den Abstand der Werkstückträger 2 gebildeten Zwischenraum der Werkstücke 10.1, 10.2 einbringbar ist. Die Infrarotstrahler 3 bestehen aus Hochleistungsquarzstrahlern, die im kurzwelligen Infrarotbereich wirksam sind und eine schnelle Aufheizung der zu verschweißenden Werkstücke 10.1, 10.2 bewirken. Hierfür nicht benötigte Bereiche der Infrarotstrahler 3 sind gegenüber den Werkstücken10.1, 10.2 durch nicht dargestellte Blenden abgedeckt. Die Werkstückträger 2 und der Werkzeughalter 4 sind durch Schnellkupplungen 6 unabhängig voneinander mit dem Maschinengestell 1 verbunden und relativ zu einander in vertikaler und horizontaler Richtung verschiebbar. Zum Einlegen der zu verschweißenden Werkstücke 10.1, 10.2 werden die Werkstückträger 2 und der Werkzeughalter 4 vertikal und / oder horizontal so weit voneinander entfernt und eventuell verschwenkt, dass die Werkstücke 10.1, 10.2 ergonomisch bequem eingelegt und entnommen werden können. Dies ist in Fig. 3 in der Seitenansicht angedeutet. Zur Durchführung einer Verschweißung der Werkstücke 10.1, 10.2 werden sie in einem exakt vorherbestimmten Abstand so angeordnet, dass die Infrarotstrahler eine hinreichende, thermische Erweichung des Werkstoffes der zu verweißenden Werkstücke 10.1, 10.2 in den zu verschweißenden Teilzonen bewirken. Ist der richtige Erweichungszustand erreicht, bei dem es sich gewöhnlich um einen schmelzflüssigen Zustand der Oberfläche der Werkstücke 10.1, 10.2 im Bereich der zu verschweißenden Zonen handelt, dann werden die Infrarotstrahler 3 mit Hilfe des Werkzeugträgers 4 aus dem Zwischenraum der Werkstücke 10.1, 10.2 entfernt und die Werkstücke 10.1, 10.2 mit einer exakt vorherbestimmten Kraft unter gegenseitiger Annäherung der Werkstückträger 2 im Bereich der zu verschweißenden Zonen miteinander verpresst. Der Werkstoff der Werkstücke 10.1, 10.2 fließt dabei in den erweichten Zonen ineinander über, wobei sich eine gegenseitige Schweißverbindung der Werkstücke 10.1, 10.2 ergibt. Diese ist nach der sich anschließenden Abkühlung des Werkstoffes mechanisch fest und stabil. Die beiden Werkstücke 10.1, 10.2 sind dadurch anschließend zu einer Einheit fest verbunden.

Von wesentlicher Bedeutung ist es für die praktische Anwendung, dass die Infrarotstrahler sehr gezielt eingesetzt werden und nur die zu verschweißenden Zonen thermisch erweichen. Dies gelingt durch eine gezielte Auswahl, Positionierung und gegebenenfalls durch eine Abdeckung der Werkstücke 10.1, 10.2 und/oder der Infrarotstrahler durch Masken in Bereichen der Werkstücke 10.1, 10.2 , die nicht zu erwärmen und zu verschweißen sind. Eine Beschädigung der Werkstücke 10.1, 10.2 ist daher in solchen Bereichen nicht durch die Verschweißung zu befürchten. Sie können demgemäss beliebig gestaltet und dort auch mit wärmeempfindlichen Zusatzteilen ausgestattet sein.

Um eine gute Verschweißung der Werkstücke 10.1, 10.2 zu erzielen, müssen die einzelnen Prozessschritte zumindest der Erwärmung der Schweißzonen der Werkstücke 10.1, 10.2 und deren Zusammenpressung exakt aufeinander abgestimmt sein und zügig durchgeführt werden. Der Abstand der Werkstückträger 2 von einander und die relative Zuordnung des Werkzeughalters 4 sind zu diesem Zweck durch eine Programmsteuerung veränderbar und die Werkstückträger 2 und der Werkzeughalter 4 sind zu einem als geschlossene Baueinheit transportablen Schweißmodul 7 zusammenfahrbar, wie in Fig. 2 gezeigt. Die Werkstückträger 2 und der Werkzeughalter 4 sind durch Schnellkupplungen 6 mit dem Maschinengestell 1 verbindbar. Die Schnellkupplungen 6 enthalten neben den mechanischen Anschlüssen der Werkstückträger 2 und des Werkzeughalters 4 die elektrischen Anschlüsse der Infrarotstrahler 3.

Die Werkstückträger 2 und der Werkzeughalter 4 sind mit Abstandhaltern 5 versehen und innerhalb des Schweißmoduls 7 durch die Abstandhalter 5 unverrückbar aufeinander abgestützt. Der Schweißmodul 7 ist dadurch als geschlossene Einheit manipulierbar, transport- und lagerfähig.

Das Maschinengestell 1 umfasst eine Programmsteuerung mit einem zusätzlichen Modul zur korrekten Ein- und Aufschaltung der beiden Infrarotstrahler 3. Dies ermöglicht es, auch unterschiedlich aktivierbare Schweißzonen so zu erwärmen, dass sie zeitgleich die optimale Schweißtemperatur erreichen als Voraussetzung dafür, dass sich nach der Entfernung der Infrarotstrahler 3 und dem Zusammenpressen der Schweißzonen eine optimale gegenseitige Verschweißung in allen Teilbereichen ergibt, d. h. ein optimales, ineinanderübergehendes Verschmelzen der beiden Werkstoffe der zu verschweißenden Werkstücke 10.1, 10.2 in den zu verschweißenden Zonen.

Die Programmsteuerung umfasst einen zusätzlichen Verriegelungsmodul für die Schnellkupplungen 6. Vor einer korrekten Verriegelung aller Schnellkupplungen 6 ist eine Inbetriebnahme und Beschädigung der Infrarotschweißvorrichtung daher ausgeschlossen.

Der Schweißmodul 7 ist nur von hinten in das Maschinengestell 1 einführbar und nur durch seitlich angebrachte Schnellkupplungen 6 mit dem Maschinengestell 1 verbindbar. Dies erleichtert einen schnellen Werkzeugwechsel.

Die beiden in das Maschinengestell 1 eingefahrenen Werkstückträger 2 sind bei der Ausführung nach Fig. 1 schwenkbar mit dem Maschinengestell 1 verbunden, wie in Fig. 3 durch Pfeile angedeutet. Ihre Beschickung mit Werkstücken 10.1, 10.2 ist dadurch stark vereinfacht. Sie erfordert insbesondere keine Zuführung und Entnahme von Werkstücken 10.1, 10.2 in / aus einer ergonomisch ungünstigen Überkopflage.

Der Werkzeughalter 4 ist in dem Maschinengestell 1 relativ zu den Werkstückträgern 2 verschiebbar angebracht, um das Einlegen oder Entnehmen vorn Werkstücken nicht zu behindern.

Dem Maschinengestell 1 ist rückseitig ein Speicher 8 für zumindest zwei Schweißmodule 7, vorliegend für fünf Schweißmodule 7 zugeordnet, wobei Mittel vorgesehen sind, die es ermöglichen, die in dem Speicher 8 aufgenommenen Schweißmodule 7 alternativ in das Maschinengestell 1 einzuführen und mit den Schnellkupplungen 6 in Eingriff zu bringen. Der Speicher 8 ist nach Art eines Hochregallagers gestaltet und umfasst mehrere übereinander angeordnete Lagerplätze, auf denen mehrere Schweißmodule 7 unabhängig voneinander abgestellt werden können, die bei Bedarf im Einzelzugriff direkt verfügbar sind und in das Maschinengestell 1 überführt werden können. Um dieses zu erleichtern sind in dem Maschinengestell 1 und dem Speicher 8 Gleitkufen für den Schweißmodul 7 vorgesehen. Das Hochregallager ist vertikal verschiebbar, um jeden Lagerplatz nach Bedarf unmittelbar hinter der rückseitigen Einführöffnung des Maschinengestells 1 positionieren zu können. Alternativ ist es möglich, einen Zwischenraum zwischen dem Hochregallager und dem Maschinengestell 1 vorzusehen, in dem ein nicht dargestellter Werkzeugmanipulator angeordnet ist. Derartige Manipulatoren sind aus der Hochregallagertechnik bekannt.

Der Schweißmodul 7 ist nur aus der Richtung der Vorderseite 9 des Maschinengestells 1 mit den zu verschweißenden Werkstücken 10.1, 10.2 beschickbar. In der gleichen Richtung sind die verschweißten Werkstücke 10 nur in Richtung der Vorderseite 9 entnehmbar.

Die Schweißmodule 7 tragen übereinstimmend angebrachte Identifizierungskennzeichen, wobei die Identifizierungskennzeichen in die Programmsteuerung manuell eingebbar eingebbar sind und wobei die Werkstückträger 2, der Werkzeughalter 4 und die beiden Infrarotstrahler 3 in Abhängigkeit von dem jeweiligen Identifizierungskennzeichen durch die Programmsteuerung betätigbar sind. Dies erspart nach einem Werkzeugwechsel gesonderte Einstellarbeiten und es ist insbesondere entbehrlich, Fachpersonal mit der Beschickung, Inbetriebnahme oder einem Werkzeugwechsel zu betrauen.

Die Programmsteuerung ist vorliegend in einem nicht dargestellten Computer enthalten, wobei die Identifizierungskennzeichen durch Sensoren des Maschinengestells 1, der Werkstückträger 2 und / oder des Werkzeughalters 4 identifizierbar sind, wobei die Sensoren signalleitend mit dem Computer verbunden sind und wobei die Werkstückträger 2, der Werkzeughalter 4 und die beiden Infrarotstrahler 3 in Abhängigkeit von dem jeweiligen Identifizierungskennzeichen durch den Computer betätigbar sind. Eine Fehlbetätigung ist dadurch völlig ausgeschlossen. Ein besonders sicher identifizierbares Identifizierungskennzeichen besteht aus einem Balkencode, worauf die Erfindung naturgemäß nicht festgelegt ist.

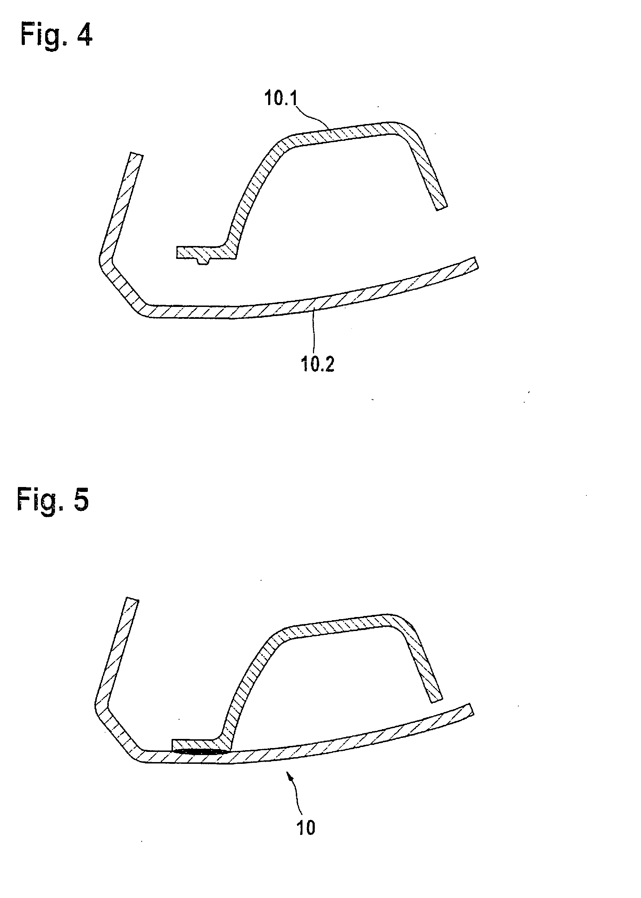

Fig. 4 zeigt zwei zu verschweißende, beispielhafte Werkstücke Fig. 4 zwei zu verschweißende, beispielhafte Werkstücke in quergeschnittener Darstellung. Es handelt sich bei ihnen um großformatige Spritzgießteile, die zur Verwendung als Träger in einer Armaturentafel für ein Kraftfahrzeug bestimmt sind und die nur in einem Teilbereich zu verschweißen sind und anschließend einen großdimensionierten Hohlraum umschließen.

In dem zu verschweißenden Teilbereich ist das eine der Werkstücke 10.1 mit einer vertikal zur Schweißebene vorspringenden, einstückig angeformten Leiste versehen, um ein hinreichend großen Volumen an verschweißbarer Masse in der Schweißzone zu Verfügung zu haben, die thermisch erweicht werden kann, ohne zugleich die Stabilität und Formbeständigkeit des Werkstücks 10.1 an sich zu gefährden. Zumindest die Leiste des einen Werkstücks 10.1 und die ihr gegenüberliegende Schweißzone des anderen Werkstücks 10.2 werden parallel zueinander durch Infrarotstrahlen auf Schweißtemperatur erwärmt, in dem der Werkszeugträger 4 mit den daran befestigten und in beiden Richtungen wirksamen Infrarotstrahlern 3 temporär in den Zwischenraum der zu verweißenden Werkstücke 10.1, 10.2 eingefahren und so aktiviert wird, dass beide Werkstücke zugleich die optimale Schweißtemperatur erreichen. Im Anschluss daran wird der Werkzeugträger 4 schnell in Querrichtung aus dem Zwischenraum herausbewegt und die beiden Werkstücke 10.1, 10.2 werden im Bereich der zu verscheißenden Zonen miteinander verpresst und die Schweißzone durch Abkühlen verfestigt.

Fig. 5 zeigt die Werkstücke 10.1, 10.2 gemäß Fig. 4 in Anschluss an die gegenseitige Verschweißung. Sie sind zu einem einzigen Formteil 10 vereint, das nur im Bereich von einer Schweißzone zusammengehalten ist und der weiteren Verwendung zugeführt werden kann. Natürlich können auch mehrere Schweißzonen vorgesehen sein, die die Werkstücke verbinden.

## Patentansprüche

1. Infrarotschweißvorrichtung, umfassend ein Maschinengestell (1), mit zumindest zwei Werkstückträgern (2) für zwei Werkstücke, deren Abstand veränderlich ist, sowie zumindest einem Infrarotstrahler (3), der an einem beweglichen Werkzeughalter (4) des Maschinengestells (1) festgelegt und in den durch den Abstand der Werkstückträger (2) gebildeten Zwischenraum der Werkstücke einbringbar ist, wobei der Abstand der Werkstückträger (2) von einander und die relative Zuordnung des Werkzeughalters (4) durch eine Programmsteuerung veränderbar sind, **dadurch gekennzeichnet, dass** die Werkstückträger (2) und der Werkzeughalter (4) zu einem als geschlossene Baueinheit transportablen Schweißmodul (7) zusammenfahrbar und durch Schnellkupplungen (6) mit dem Maschinengestell (1) verbindbar sind.

2. Infrarotschweißvorrichtung nach Anspruch 1, **dadurch gekennzeichnet, dass** die Werkstückträger (2) und/oder der Werkzeughalter (4) mit Abstandhaltern (5) versehen und innerhalb des Schweißmoduls (7) durch die Abstandhalter (5) unverrückbar aufeinander abgestützt sind.

3. Infrarotschweißvorrichtung nach Anspruch 1 oder 2, **dadurch gekennzeichnet, dass** die Programmsteuerung einen zusätzlichen Modul zur Ein- und Ausschaltung des mindestens einen Infrarotstrahlers (3) umfasst.

4. Infrarotschweißvorrichtung nach einem der Ansprüche 1 bis 3, **dadurch gekennzeichnet, dass** die Programmsteuerung einen zusätzlichen Verriegelungsmodul für die Schnellkupplungen (6) umfasst.

5. Infrarotschweißvorrichtung nach einem der Ansprüche 1 bis 4, **dadurch gekennzeichnet, dass** der Schweißmodul (7) von hinten in das Maschinengestell (1) einführbar und nur durch seitlich angebrachte Schnellkupplungen (6) mit dem Maschinengestell (1) verbindbar ist.

6. Infrarotschweißvorrichtung nach einem der Ansprüche 1 bis 5, **dadurch gekennzeichnet, dass** zumindest ein Werkstückträger (2) schwenkbar mit dem Maschinengestells (1) verbindbar ist.

7. Infrarotschweißvorrichtung nach einem der Ansprüche 1 bis 6, **dadurch gekennzeichnet, dass** der Werkzeughalter (4) in dem Maschinengestell (1) relativ zu den Werkstückträgern (2) verschiebbar oder schwenkbar ist.

8. Infrarotschweißvorrichtung nach einem der Ansprüche 1 bis 7, **dadurch gekennzeichnet, dass** dem Maschinengestell (1) rückseitig ein Speicher (8) für zumindest zwei Schweißmodule (7) zugeordnet ist und dass Mittel vorgesehen sind, die es ermöglichen, die in dem Speicher (8) aufgenommenen Schweißmodule 7 alternativ in das Maschinengestell (1) einzuführen und mit den Schnellkupplungen (6) in Eingriff zu bringen.

9. Infrarotschweißvorrichtung nach einem der Ansprüche 1 bis 8, **dadurch gekennzeichnet, dass** der Schweißmodul (7) aus der Richtung der Vorderseite (9) des Maschinengestells (1) mit den zu verschweißenden Werkstücken (10.1, 10.2) beschickbar ist und dass die verschweißten Werkstücke (10) in Richtung der Vorderseite (9) entnehmbar sind.

10. Infrarotschweißvorrichtung nach Anspruch 1 bis 9, **dadurch gekennzeichnet, dass** zumindest zwei Schweißmodule (7) vorgesehen sind, die übereinstimmend angebrachte Identifizierungskennzeichen tragen, dass die Identifizierungskennzeichen in die Programmsteuerung eingebbar eingebbar sind und dass die Werkstückträger (2), der Werkzeughalter (4) und der mindestens eine Infrarotstrahler (3) in Abhängigkeit von dem jeweiligen Identifizierungskennzeichen durch die Programmsteuerung betätigbar sind.

11. Infrarotschweißvorrichtung nach Anspruch 10, **dadurch gekennzeichnet, dass** die Programmsteuerung in einem Computer enthalten ist, dass die Identifizierungskennzeichen durch Sensoren des Maschinengestells (1), der Werkstückträger (2) und / oder des Werkzeughalters (4) identifizierbar sind und dass die Sensoren signalleitend mit dem Computer verbunden sind und dass die Werkstückträger (2), der Werkzeughalter (4) und der mindestens eine Infrarotstrahler (3) in Abhängigkeit von dem jeweiligen Identifizierungskennzeichen durch den Computer betätigbar sind.

12. Infrarotschweißvorrichtung nach einem der Ansprüche 1 bis 11, **dadurch gekennzeichnet, dass** zumindest in dem Maschinengestell (1) Gleitkufen und / oder Rollenbahnen zur erleichterten Einführung und Entnahme des Schweißmoduls (7) vorgesehen sind.

## Claims

1. Infrared welding apparatus, comprising a machine frame (1), having at least two workpiece carriers (2) for two workpieces, the distance between which is variable, and at least one infrared source (3) which is fixed to a movable tool holder (4) of the machine frame (1) and can be introduced into the gap between the workpieces formed by the distance between the workpiece carriers (2), wherein the distance between the workpiece carriers (2) and the relative correlation of the tool holder (4) are variable by a program control system, **characterised in that** the workpiece carriers (2) and the tool holder (4) can be brought together to form a welding module (7) which is transportable as a closed unit, and can be connected to the machine frame (1) by quick-release couplings (6).

2. Infrared welding apparatus according to claim 1, **characterised in that** the workpiece carriers (2) and/or the tool holder (4) are provided with spacers (5) and immovably supported on each other within the welding module (7) by the spacers (5).

3. Infrared welding apparatus according to claim 1 or 2, **characterised in that** the program control system comprises an additional module for switching on and off the at least one infrared source (3).

4. Infrared welding apparatus according to any of claims 1 to 3, **characterised in that** the program control system comprises an additional locking module for the quick-release couplings (6).

5. Infrared welding apparatus according to any of claims 1 to 4, **characterised in that** the welding module (7) can be introduced into the machine frame (1) from behind and can be connected to the machine frame (1) only by laterally mounted quick-release couplings (6).

6. Infrared welding apparatus according to any of claims 1 to 5, **characterised in that** at least one workpiece carrier (2) can be pivotably connected to the machine frame (1).

7. Infrared welding apparatus according to any of claims 1 to 6, **characterised in that** the tool holder (4) is slidable or pivotable in the machine frame (1) relative to the workpiece carriers (2).

8. Infrared welding apparatus according to any of claims 1 to 7, **characterised in that** associated with the machine frame (1) on the rear side is a storage means (8) for at least two welding modules (7) and **in that** means are provided which make it possible to introduce the welding modules (7) held in the storage means (8) into the machine frame (1) alternately and bring them into engagement with the quick-release couplings (6).

9. Infrared welding apparatus according to any of claims 1 to 8, **characterised in that** the welding module (7) can be loaded with the workpieces (10.1, 10.2) to be welded from the direction of the front side (9) of the machine frame (1) and **in that** the welded workpieces (10) can be removed in the direction of the front side (9).

10. Infrared welding apparatus according to claims 1 to 9, **characterised in that** at least two welding modules (7) are provided, which bear correspondingly mounted identification marks, **in that** the identification marks can be entered in the program control system and **in that** the workpiece carriers (2), the tool holder (4) and the at least one infrared source (3) can be actuated by the program control system as a function of the respective identification mark.

11. Infrared welding apparatus according to claim 10, **characterised in that** the program control system is contained in a computer, **in that** the identification marks can be identified by sensors of the machine frame (1), the workpiece carriers (2) and/or the tool holder (4) and **in that** the sensors are connected to the computer in signal-conducting relationship and **in that** the workpiece carriers (2), the tool holder (4) and the at least one infrared source (3) can be actuated by the computer as a function of the respective identification mark.

12. Infrared welding apparatus according to any of claims 1 to 11, **characterised in that** at least in the machine frame (1) runners and/or roller tracks are provided for easier introduction and removal of the welding module (7).

## Revendications

1. Dispositif de soudage par infrarouge, comportant un bâti (1) avec au moins deux porte-pièce (2) pour deux pièces à souder, dont la distance est variable, ainsi qu'au moins un émetteur de rayons infrarouges (3), qui est fixé à un porte-outil (4) mobile du bâti (1) et pouvant être introduit dans l'intervalle entre les pièces à souder, formé par la distance entre les porte-pièce (2), la distance entre les porte-pièce (2) et l'affectation relative du porte-outil (4) pouvant être modifiées par une commande du programme, **caractérisé en ce que** le porte-pièce (2) et le porte-outil (4) peuvent être réunis pour former un module de soudage (7) transportable sous forme d'unité fermée et peuvent être reliés au bâti (1) par des raccords rapides (6).

2. Dispositif de soudage par infrarouge selon la revendication 1, **caractérisé en ce que** les porte-pièce (2) et/ou le porte-outil (4) sont munis d'écarteurs (5) et, à l'intérieur du module de soudage (7), prennent appui l'un sur l'autre de manière immobile par l'intermédiaire des écarteurs (5).

3. Dispositif de soudage par infrarouge selon la revendication 1 ou 2, **caractérisé en ce que** la commande du programme comprend un module supplémentaire pour la mise en marche et l'arrêt dudit au moins un émetteur de rayons infrarouges (3).

4. Dispositif de soudage par infrarouge selon l'une quelconque des revendications 1 à 3, **caractérisé en ce que** la commande du programme comprend un module de verrouillage supplémentaire pour les raccords rapides (6).

5. Dispositif de soudage par infrarouge selon l'une quelconque des revendications 1 à 4, **caractérisé en ce que** le module de soudage (7) peut être introduit de l'arrière dans le bâti (1) et peut être relié au bâti (1) uniquement par des raccords rapides (6) attachés latéralement.

6. Dispositif de soudage par infrarouge selon l'une quelconque des revendications 1 à 5, **caractérisé en ce qu'**au moins un porte-pièce (2) peut être relié de manière pivotante au bâti (1).

7. Dispositif de soudage par infrarouge selon l'une quelconque des revendications 1 à 6, **caractérisé en ce que** le porte-outil (4) est monté dans le bâti (1) de manière mobile en translation ou de manière pivotante par rapport aux porte-pièce (2).

8. Dispositif de soudage par infrarouge selon l'une quelconque des revendications 1 à 7, **caractérisé en ce qu'**une réserve (8) pour au moins deux modules de soudage (7) est associée au bâti (1) sur la face arrière, et **en ce qu'**il est prévu des moyens qui permettent d'introduire alternativement dans le bâti (1) les modules de soudage (7) logés dans la réserve (8) et de les amener en prise avec les raccords rapides (6).

9. Dispositif de soudage par infrarouge selon l'une quelconque des revendications 1 à 8, **caractérisé en ce que** les pièces à souder (10.1, 10.2) peuvent être chargées sur le module de soudage (7) à partir de la face avant (9) du bâti (1), et **en ce que** les pièces soudées (10) peuvent être retirées en direction de la face avant (9).

10. Dispositif de soudage par infrarouge selon l'une quelconque des revendications 1 à 9, **caractérisé en ce qu'**il est prévu au moins deux modules de soudage (7), qui portent des signes d'identification apposés de manière concordante, **en ce que** les signes d'identification peuvent être entrés dans la commande du programme et **en ce que** les porte-pièce (2), le porte-outil (4) et ledit au moins un émetteur de rayons infrarouges (3) peuvent être actionnés par la commande du programme en fonction du signe d'identification respectif.

11. Dispositif de soudage par infrarouge selon la revendication 10, **caractérisé en ce que** la commande du programme est contenue dans un ordinateur, **en ce que** les signes d'identification peuvent être identifiés par des capteurs du bâti (1), des porte-pièce (2) et/ou du porte-outil (4), et **en ce que** les capteurs sont reliés à l'ordinateur pour la transmission de signaux, et **en ce que** les porte-pièce (2), le porte-outil (4) et ledit au moins un émetteur de rayons infrarouges (3) peuvent être actionnés par l'ordinateur en fonction du signe d'identification respectif.

12. Dispositif de soudage par infrarouge selon l'une quelconque des revendications 1 à 11, **caractérisé en ce qu'**au moins dans le bâti (1) sont prévus des patins de glissement et/ou des voies de roulement pour faciliter l'introduction et le retrait du module de soudage (7).
